# DEMANDE DE BREVET EUROPEEN

(11) **EP 0 553 579 A1**
(43) Date de publication de la demande: **04.08.1993**
(21) Numéro de dépôt: 92403186.7
(22) Date de dépôt: 26.11.1992
(51) Int. Cl.: H04N 1/04

(54) **Télécopieur à ensemble d'analyse et de lecture perfectionné**

(30) Priorité: 29.11.1991 FR 9114785
(71) Demandeur: SOCIETE D'APPLICATIONS GENERALES D'ELECTRICITE ET DE MECANIQUE SAGEM, F-75783 Paris Cédex 16 (FR)
(72) Inventeur: Kuhn, Alex, F-95430 Auvers Sur Oise (FR)
(74) Mandataire: Bloch, Gérard

(57) **Abrégé**

Le télécopieur comporte une tête d'écriture (4), une tête d'analyse (3) et un unique rouleau d'appui (2) pour faire défiler un document à émettre contre la tête d'analyse (3) et un document à recevoir contre la tête d'écriture (4). Les deux têtes (3,4) sont montées mobiles, en déplacement d'une position en appui contre le rouleau (2) à une position écartée. Le rouleau (2) est toujours entraîné dans le même sens par un moteur (11) qui sert aussi à la sélection et au déplacement des deux têtes (3,4).

L'encombrement du télécopieur est très réduit.

## Description

La présente invention concerne un télécopieur comportant des moyens d'analyse d'un document papier à émettre, une tête d'analyse, des moyens d'écriture d'un document à recevoir, avec une tête d'écriture, et un unique rouleau d'appui disposé pour faire défiler aussi bien un document à émettre qu'un document à recevoir respectivement contre la tête d'analyse et la tête d'écriture, la tête d'analyse et la tête d'écriture étant montées mobiles en déplacement, contre l'action de moyens de rappel, d'une position en appui contre le rouleau à une position écartée.

Dans les télécopieurs actuellement disponibles sur le marché, les moyens d'analyse comportent une tête d'analyse et un rouleau d'appui monté rotatif pour entraîner le document à émettre entre la tête et le rouleau d'analyse et le faire défiler contre la tête d'analyse.

Quant aux moyens d'écriture, généralement d'écriture thermique par éléments résistifs chauffants, ils comportent une tête d'écriture et un rouleau d'appui monté rotatif pour entraîner le document à recevoir entre la tête et le rouleau d'écriture et le faire défiler contre la tête d'écriture. Ainsi, dans les télécopieurs classiques, on trouve deux rouleaux d'appui et de défilement, l'un pour l'analyse, l'autre pour l'écriture.

La demanderesse a cherché à réduire l'encombrement global et le coût des télécopieurs, ainsi qu'à simplifier les chaînes cinématiques d'entraînement des documents.

EP-A-0 369 299 enseigne un télécopieur du type mentionné ci-dessus. Mais dans ce télécopieur, la sélection des têtes, d'écriture ou de lecture, devant venir en appui avec le rouleau s'effectue à l'aide d'un levier à actionnement manuel, avec donc le risque d'oublier de rebasculer le levier en bonne position. En outre, le document ne prévoit qu'une alternative, l'une ou l'autre des deux têtes en appui contre le rouleau.

La présente invention vise aussi à perfectionner le télécopieur de ce document antérieur pour en éliminer ces inconvénients.

A cet effet, la présente invention concerne un télécopieur du type mentionné ci-dessus, caractérisé par le fait que le rouleau d'appui et de défilement est entraîné en rotation par des moyens d'entraînement qui l'entraînent dans le même sens pour faire défiler aussi bien un document à émettre qu'un document à recevoir respectivement contre la tête d'analyse et la tête d'écriture et il est prévu des moyens de déplacement et de sélection des têtes comprenant les moyens d'entraînement en rotation du rouleau d'appui et de défilement.

Patent abstracts of Japan, vol.4, no 187 (M-48) (669) 23 décembre 1980, JP-A-55132257, certes, enseigne un appareil avec un seul rouleau de défilement entraîné dans un seul sens. Mais il s'agit, non pas d'un télécopieur, mais d'un photocopieur dont les têtes de lecture et d'écriture, de surcroît, ne sont jamais en appui contre le rouleau.

Avantageusement, il est prévu des moyens de déplacement des têtes qui comportent une came, agencée pour coopérer avec les têtes et, de préférence, être entraînée, par les moyens d'entraînement en rotation du rouleau, mais dans le sens opposé au sens d'entraînement du rouleau, ainsi que des moyens de détection de la position angulaire de la came.

Dans ce cas, le rouleau d'appui et de défilement et la came de déplacement des têtes peuvent être entraînés par les moyens d'entraînement en rotation respectivement par deux roues libres montées libres en rotation en sens opposés.

L'invention sera mieux comprise à l'aide de la description suivante de la forme de réalisation préférée de l'ensemble d'analyse et d'écriture du télécopieur de l'invention, en référence au dessin annexé, sur lequel
- la figure 1: représente un schéma de l'ensemble d'analyse et d'écriture ;
- la figure 2: représente, partiellement en coupe, la chaîne cinématique d'entraînement en rotation du rouleau d'appui et de défilement et de la came de déplacement des têtes ;
- les figures 3: représentent l'ensemble de la figure 1, respectivement en position de réception, d'émission et de copie locale et
- les figures 4: représentent le rouleau d'appui et de défilement et la came de déplacement, respectivement en position de réception, en position d'émission et dans l'une des deux positions de copie locale.

Le télécopieur de l'invention ne se distinguant de ceux de l'art antérieur que par les éléments représentés au dessin, ses autres éléments, bien connus de l'homme de métier, ne seront pas décrits ni même évoqués.

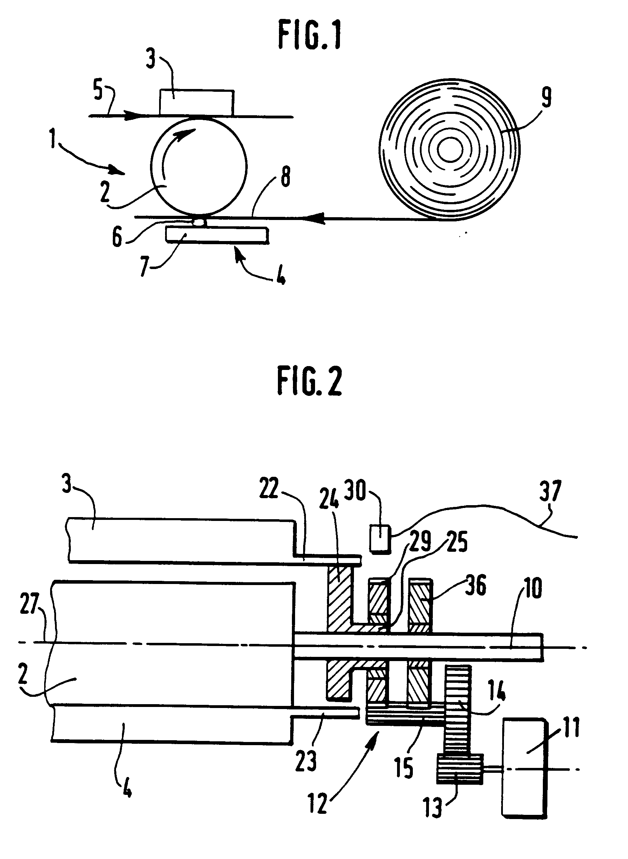

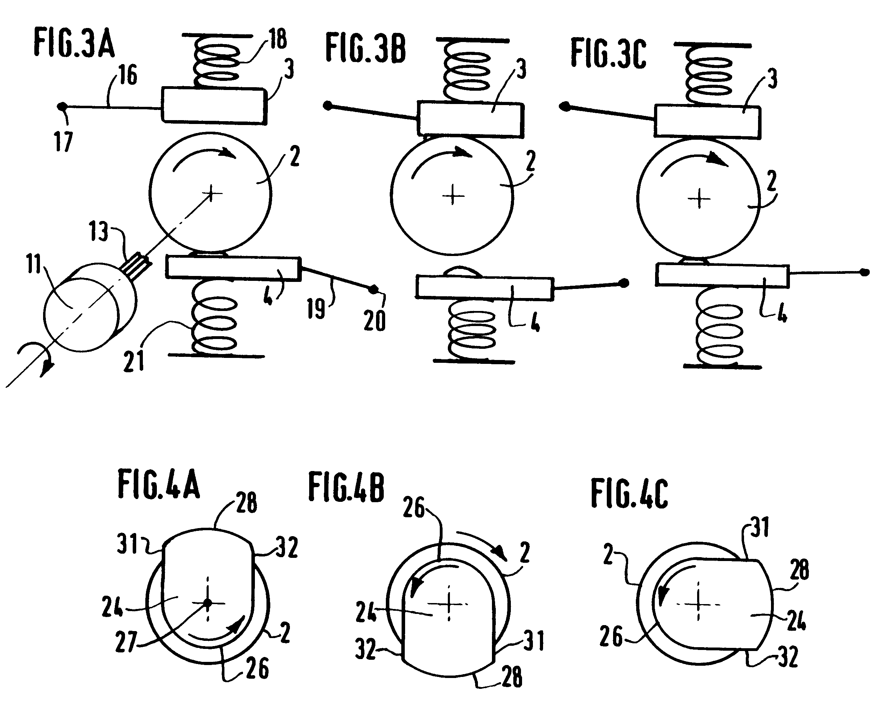

Le télécopieur comporte un ensemble d'analyse et d'écriture 1 comprenant un rouleau d'appui et de défilement 2 et une tête d'analyse 3 et une tête d'écriture 4 montées autour du rouleau 2 et ici diamétralement opposées par rapport au rouleau 2. La tête d'analyse, ou détecteur CIS (contact image sensor), est destinée à analyser un document papier 5 à émettre ou à télécopier sur un autre télécopieur, qui défile contre elle et entre elle et le rouleau 2 sous l'action du rouleau 2 entraîné en rotation dans un sens, soit ici, et en référence à la figure 1, dans le sens des aiguilles d'une montre.

La tête d'écriture 4, en l'espèce à éléments résistifs chauffants disposés sur une céramique 6 fixée sur un support radiateur 7, est destinée à reproduire par impression un document papier émis par un autre télécopieur, sur une feuille de papier 8 déroulée à partir d'un rouleau alimentaire de papier thermique 9, qui défile contre elle et entre elle et le rouleau d'appui 2 sous l'action du rouleau 2 entraîné en rotation dans le même sens que celui de l'analyse.

Le rouleau d'appui et de défilement 2, en référence à la figure 2, est monté sur un axe 10 disposé pour être entraîné en rotation dans le sens d'analyse et d'écriture par un moteur 11, à deux sens de rotation, et ici pas à pas, par l'intermédiaire d'une chaîne cinématique 12 comprenant un pignon 13 de sortie de moteur, un pignon réducteur 14, un pignon 15 et une roue libre 36 montée sur l'axe 10 libre en rotation dans le sens opposé à celui de l'entraînement du rouleau 2 et engrenant avec le pignon 15.

La tête d'analyse 3 est montée sur un bras 16 articulé en 17 pour pouvoir, ici contre l'action d'un ressort de rappel 18, être déplacée d'une position en appui contre le rouleau 2 (figures 3B, 3C, 4B, 4C) à une position écartée (figures 3A, 4A). De même, la tête d'écriture est montée sur un bras 19 articulé en 20 pour pouvoir, contre l'action d'un ressort de rappel 21, être déplacée d'une position en appui contre le rouleau 2 (figures 3A, 3C, 4A, 4C) à une position écartée (figures 3B, 4B).

La tête d'analyse comporte un bec de déplacement 22 ainsi que la tête d'écriture, un bec de déplacement 23 s'étendant tous deux sensiblement parallèlement à l'axe 10 du rouleau 2 pour pouvoir coopérer avec une came de déplacement et de sélection 24. La came 24 est montée sur l'axe 10 libre en rotation dans les deux sens par un moyeu 25 excentré. Dans l'exemple représenté, la came 24 comporte un bord d'analyse et d'écriture 26 à une distance de l'axe 27 du moyeu 25 plus petite que le rayon du rouleau d'appui 2.

Opposé au bord 26 se trouve un bord de déplacement de tête 28, à une distance de l'axe 27 plus grande que le rayon du rouleau 2. Les deux bords 26, 28 sont réunis par deux autres bords 31, 32 éloignés de l'axe 27 d'une distance inférieure au rayon du rouleau 2 et qui peuvent être qualifiés de bords de copie locale.

Sur le moyeu 25 est montée une roue libre 29, libre en rotation dans le sens opposé à celui de la roue libre 36, c'est-à-dire dans le sens d'entraînement en rotation du rouleau 2, et engrenant avec le pignon 15. L'entraînement en rotation de la came 24 s'effectue donc par l'intermédiaire de la roue libre 29, les pignons 15, 14, 13 et le moteur 11 tournant dans le sens opposé à celui dans lequel il entraîne le rouleau 2.

Le télécopieur comprend en outre un organe 30 de détection de la position angulaire de la came 24, relié (37) à la commande du moteur 11. En l'espèce, il s'agit d'un micro-contact actionné ici par la roue libre 29 uniquement dans la position, de la came 24, de la figure 4C, pour repérer la position de repos. Par comptage des pas du moteur 11, on connaît la position angulaire de la came.

En position de repos (figures 3C, 4C), les deux têtes 3, 4 sont en appui contre la rouleau 2, la came étant inactive, avec son bord de déplacement 28 entre les deux têtes 3, 4. On remarquera que dans cette position, le télécopieur est en mode copie locale.

A partir de la position de repos, pour mettre le télécopieur en mode réception (figures 3A, 4A), la tête d'écriture 4 étant seule contre le rouleau 2, on fait tourner la came de 90 degrés, par comptage des pas du moteur 11 dans le sens inverse des aiguilles d'une montre sur les figures 4. Le bord 28 de la came entre en contact avec le bec 22 de la tête d'analyse 3 pour le repousser, écarter la tête 3 du rouleau d'appui 2, faire pivoter le bras 16 et comprimer le ressort 18. A la fin de la réception, le télécopieur se remet automatiquement en mode copie locale après rotation de 270 degrés de la came de déplacement et donc passage par les positions correspondant aux modes copie locale, à nouveau, et émission.

A partir de la position de repos (figures 3C,4C), pour mettre le télécopieur en mode émission (figures 3B, 4B), la tête d'analyse 3 étant seule contre le rouleau 2, on fait tourner la came 24 de 270 degrés, en passant par les positions correspondant aux modes réception et copie locale. Le bord 28 de la came 24 entre en contact avec le bec 23 de la tête d'écriture 4 pour le repousser, écarter la tête 4 du rouleau d'appui 2, faire pivoter le bras 19 et comprimer le ressort 21. A la fin de l'émission, le télécopieur se remet aussi automatiquement en mode copie locale après rotation de 90 degrés de la came de déplacement 24.

On aura remarqué que le profil de came 28, 32, 26, 31 est tel que la sélection du mode de fonctionnement du télécopieur s'effectue de façon séquentielle depuis le mode copie locale en passant successivement par les modes réception, copie locale, émission et copie locale.

Le rouleau d'appui et de défilement 2 servant aussi en émission, sa surface latérale est ici de couleur blanche pour ne porter aucune information qui sinon serait transmise.

On notera encore que c'est dans la position du mode émission qu'on charge le rouleau alimentaire de papier, entre la tête d'écriture et le rouleau d'appui.

On a décrit une cinématique de sélection de tête évidemment particulière. On pourrait en imaginer d'autres sans pour autant sortir de la portée de la présente demande.

## Revendications

1. Télécopieur comportant des moyens d'analyse d'un document papier (5) à émettre, une tête d'analyse (3), des moyens d'écriture d'un document à recevoir (8), avec une tête d'écriture (4), et un unique rouleau d'appui (2) disposé pour faire défiler aussi bien un document (5) à émettre qu'un document à recevoir (8) respectivement contre la tête d'analyse (3) et la tête d'écriture (4), la tête d'analyse (3) et la tête d'écriture (4) étant montées mobiles en déplacement, contre l'action de moyens de rappel (18,21), d'une position en appui contre le rouleau (2) à une position écartée, télécopieur caractérisé par le fait que le rouleau d'appui et de défilement (2) est entraîné en rotation par des moyens d'entraînement (11) qui l'entraînent dans le même sens pour faire défiler aussi bien un document (5) à émettre qu'un document à recevoir (8) respectivement contre la tête d'analyse (3) et la tête d'écriture (4) et il est prévu des moyens de déplacement et de sélection des têtes (3,4) comprenant les moyens (11) d'entraînement en rotation du rouleau d'appui et de défilement (2).

2. Télécopieur selon la revendication 1, dans lequel la tête d'analyse (3) et la tête d'écriture (4) sont montées sensiblement diamétralement opposées par rapport au rouleau d'appui et de défilement (2).

3. Télécopieur selon l'une des revendications 1 et 2, dans lequel il est prévu des moyens de déplacement et de sélection des têtes (3,4) comportant une came (24) et des moyens (30) de détection de la position angulaire de la came (24).

4. Télécopieur selon la revendication 3, dans lequel la came (24) est agencée pour être entraînée en rotation par les moyens (11) d'entraînement en rotation du rouleau (2), mais dans le sens opposé au sens d'entraînement du rouleau (2).

5. Télécopieur selon la revendication 4, dans lequel le rouleau d'appui et de défilement (2) et la came de sélection (24) sont entraînés en rotation par un moteur (11) respectivement par deux roues libres (16, 29) montées libres en rotation en sens opposés.

6. Télécopieur selon l'une des revendications 3 à 5, dans lequel la came de sélection (24) a un profil (28,32,26,31) conformé pour sélectionner le mode de fonctionnement du télécopieur de façon séquentielle.
